# EUROPEAN PATENT APPLICATION

(11) **EP 4 814 807 A1**
(43) Date of publication of application: **30.09.2026**
(21) Application number: 26160039.9
(22) Date of filing: 23.02.2026
(51) Int. Cl.: G06N 10/40

(54) **MODULAR OPTICAL QUANTUM COMPUTER**

(30) Priority: 28.03.2025 GB 202504629
(71) Applicant: QuiX Quantum BV, 7521 AN Enschede (NL)
(72) Inventor: DEMILLE, Trevor, 7521 AN Enschede (NL); STEPHENS, Emlyn Arturo, 7521 AN Enschede (NL)
(74) Representative: CMS Cameron McKenna Nabarro Olswang LLP

(57) **Abstract**

A modular optical quantum computer, the modular optical quantum computer is defined. The modular optical quantum computer comprises M modular bundles, wherein M is greater than or equal to 1, and wherein each modular bundle of the M modular bundles comprises: a respective switching module; a respective graph state generation module; and a respective processor module. Each graph state generation module comprising a graph state generator configured to generate one or more graph states from the one or more photons received from the respective switching module. Each processor module comprising a quantum optical processor configured to process the photons of the graph state by performing quantum operations on the photons of the one or more graph states.

## Description

### Background

Recent years has seen developments in the field of quantum algorithms that, if they could be implemented on a universal quantum computer could lead to super polynomial speedups compared to the best-known classical algorithms. While Shor's factoring algorithm is the best known, super polynomial speedups can be found for problems as general as discrete-logarithms, Pell's equations, Gauss Sums, and the Non-Abelian Hidden Subgroup problem. However, there are still challenges when it comes to building quantum computers and in particular large scale universal quantum computers. Thus, it would be desirable to provide a potential architecture for implementing a large scale universal quantum computer.

The embodiments described below are not limited to implementations which solve any or all of the disadvantages of known architectures for large scale universal quantum computers.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The invention is set out in the appended set of claims.

A first example provides a modular optical quantum computer. The modular optical quantum computer comprises M modular bundles, wherein M is greater than or equal to 1. Each modular bundle of the M modular bundles comprises: a respective switching module; a respective graph state generation module; and a respective processor module. The respective switching modules comprise: a first set of one or more input waveguides, each waveguide of the first set of one or more input waveguides configured to receive one or more photons from a photon generator; a second set of one or more input waveguides, each waveguide of the second set of one or more input waveguides configured to receive one or more photons from a switching module of another of the M modular bundles; a third set of one or more input waveguides, each waveguide of the third set of one or more input waveguides configured to receive one or more photons from the respective processor module; a first set of one or more output waveguides, each waveguide of the first set of one or more output waveguides configured to output the received photon to the respective graph state generation module; a second set of one or more output waveguides, each waveguide of the second set of one or more output waveguides configured to output the received photon to a switching module of another of the M modular bundles; and a switching architecture configured to switch one or more photons received on any of the first, second or third set of one or more input waveguides to any of the first or second set of one or more output waveguides. The respective graph state generation modules comprise: a set of one or more input waveguides, each waveguide of the set of one or more input waveguides configured to receive one or more photons from the first set of one or more output waveguides of the respective switching module; a graph state generator configured to generate one or more graph states from the one or more photons received from the respective switching module; and an output waveguide configured to output the generated one or more graph states to the respective processor module. The respective processor modules comprise an input waveguide configured to receive the one or more graph states from the output waveguide of the respective graph state generation module; a quantum optical processor configured to process the photons of the graph state by performing quantum operations on the photons of the one or more graph states; a first output waveguide configured to output the processed photons of the graph state to a photon detector apparatus; and a second set of one or more output waveguides configured to output the processed photons of the graph state to the respective switching module. The use of modules in optical quantum computing allows for easier maintenance, scaling and repair. However, splitting all elements into single modules results in increased facet loss and also can present challenges in routing. The above-mentioned module bundles provide a trade-off between the repair and scaling benefits of using modules while also providing scalable routing and reducing facet loss by grouping modules together where appropriate.

In some examples, each respective processing module further comprises: one or more further sets of output waveguides, each waveguide of the one or more further sets of output waveguides configured to output the processed photons of the graph state to a switching module of another of the M modular bundles; and each respective switching module further comprises: one or more further sets of input waveguides, each waveguide of the one or more further sets of input waveguides configured to receive photons from a processing module of another of the M modular bundles, and wherein: the switching architecture of the respective switching module is configured to switch a photon received on any of the first, second, third, and one or more further sets of one or more input waveguides to any of the first or second sets of one or more output waveguides. Hence, in some examples, photons can be routed directly from a processing module or one modular bundle to a switching module of another modular bundle providing more flexible routing through the optical quantum computer.

In some cases of the above example, the one or more further sets of one or more output waveguides of each processing module comprise M-1 further sets of one or more output waveguides and each of the M-1 further sets of one or more output waveguides is configured to output a photon to a switching module of a different one of the M modular bundles; the one or more further sets of one or more input waveguides of each switching module comprise M-1 further sets of one or more input waveguides and each of the M-1 further sets of input waveguides is configured to receive a photon from a processing module of a different one of the M modular bundles; and the switching architecture of each switching module is configured to switch a photon received on any of the first, second, third, and M-1 further sets of one or more input waveguides to any of the first or second sets of one or more output waveguides. Hence, there is fully flexible routing between processor modules of modular bundles and the switching modules of other modular bundles resulting in flexible and efficient routing. In other cases of the above example, the one or more further sets of one or more output waveguides of each processing module comprise one further set of one or more output waveguides, wherein the one further set of one or more output waveguides for the ith processing module, wherein i is an integer from 1 to M, is configured to output a photon to a switching module of the i+1th modulo M modular bundle; the one or more further sets of one or more input waveguides of each switching module comprises one further set of one or more input waveguides, wherein the one further set of one or more input waveguides for the jth switching module, wherein j is from 1 to M, is configured to receive a photon from the processing module of the M-1th modulo M modular bundle; and the switching architecture of each switching module is configured to switch a photon received on any of the first, second, third, and one further sets of one or more input waveguides to any of the first or second sets of one or more output waveguides. This provides some flexibility in how the processing module of one modular bundle is connected to the switching module of another module bundle thus allow faster and more flexible routing while still providing simplicity in routing rules simplifying the optical quantum computer.

In some examples, each modular bundle of the M modular bundles further comprises: a set of first one or more delay waveguides, wherein each first delay waveguide of the set of first one or more delay waveguides is positioned between a waveguide from the first set of one or more output waveguide of the switching module of the respective modular bundle and a waveguide from the set of one or more input waveguide of the graph state generation module of the respective modular bundle, and optionally, wherein each first delay waveguide of the set of first one or more delay waveguides for a respective modular bundle is a different length. In some cases, the delay waveguides can also be referred to as delay lines and can all be some integer number of clock-cycles long given the speed of light. The delay waveguides or delay lines allow photons to be collected and so enter the graph state generation module in an indistinguishable fashion.

In some examples, the second set of one or more output waveguide of the switching module of the ith module bundle, wherein i is an integer from 1 to M, is configured to output a photon to the second set of one or more input waveguide of the switching module of the i+1th modulo M modular bundle. This allows the switching module of one modular bundle to output photons to a switching module of another modular bundle providing connections between the modular bundles and allowing the modular bundles to work together while maintaining simplicity in routing and structure thus reducing the complexity of building the modular optical quantum computer.

In some cases of the above example, the modular optical quantum computer further comprises M sets of second one or more delay waveguides, wherein each second delay waveguide of an ith set of second one or more delay waveguides, wherein i is between 1 and M, is positioned between a waveguide from the second set of one or more output waveguides of the switching module of the ith modular bundle and a waveguide from the second set of one or more input waveguides of the switching module of the i+1th modulo M modular bundle; and optionally, wherein each second delay waveguide of the ith set of second one or more delay waveguides is a different length. As above, the delay waveguides can be referred to as delay lines and can all be some integer number of clock-cycles long given the speed of light. The use of delay lines or delay waveguides enables the timing of photons arriving at the switching modules to be controlled and allows photons to arrive at the switching modules in an indistinguishable fashion.

In other examples, the second set of one or more output waveguide of each switching module comprises M-1 subsets of one or more output waveguides, each subset of one or more output waveguides of the M-1 subsets of one or more output waveguides configured to output a photon to a switching module of a different another of the M modular bundles; and the second set of one or more input waveguides of each switching module comprises M-1 subsets on one or more input waveguides, each subset of the M-1 subsets of one or more input waveguides configured to receive a photon from a switching module of a different another of the M modular bundles. This provides improved connectivity between the switching modules and allows more complex, flexible and efficient routing at the expense of more waveguides.

In some cases of the above example, the modular optical quantum computer further comprises M sets of second one or more delay waveguides, each set of second one or more delay waveguides divided into M-1 subsets of second one or more delay waveguides; wherein the second set of one or more input waveguides for each modular bundle are connected to the second set of one or more input waveguides of the other modular bundles via a second delay waveguide from the M sets of second one or more delay waveguides; and optionally, wherein each second one or more delay waveguide in a subset of the M-1 subsets of M sets of second one or more delay waveguides is a different length. As above, the delay waveguides can be referred to as delay lines and can all be some integer number of clock-cycles long given the speed of light. The use of delay lines or delay waveguides enables the timing of photons arriving at the switching modules to be controlled and allows photons to arrive at the switching modules in an indistinguishable fashion.

In some examples, the modular optical quantum computer further comprises a photon generator, wherein the photon generator comprises: a laser; an optical spitter configured to split light received from the laser into N beams of light, wherein N is a positive integer greater than or equal to 1; and N heralded single photon modules, wherein each of the N heralded single photon modules comprises: one or more heralded single photon sources configured to receive one of the N beams of light from the optical splitter and to generate a pair of single photons; a first set of one or more output waveguides configured to output a first photon of the pair of single photons to the first set of one or more input waveguides of the switching module of M modular bundles; and a second set of one or more output waveguide configured to output a second photon of the pair of single photons to the single-photon detector apparatus. Hence the modular optical quantum computer can further comprise a photon generator with probabilistic heralded single photon sources where a signal photon from each heralded single photon source can be routed into the modular bundles via a switching module and an idler photon can be measured by a photon detector apparatus to confirm the presence of the signal photon. The use of multiple heralded single photon modules and heralded single photon sources ensures that a sufficient number of photons can be generated per time step for use by the modular bundles even when photon generation is probabilistic.

In some examples, the first output waveguide of each of the N heralded single photon modules outputs a first photon to the first set of one or more input waveguides of the switching module of the first modular bundle via a quantum memory. In these examples, the modular optical quantum computer may further comprise the quantum memory, the quantum memory comprising: K input waveguides, each input waveguide configured to receive a photon from an output waveguide of one of the N heralded single photon modules; K delay lines, each delay line configured to receive a photon from one of the N input waveguides; and K output waveguide, each output waveguide configured to receive a photon from one of the K delay lines and output the photon to the first set of one or more input waveguides of the switching module of the first modular bundle. The K delay lines can each be associated with a heralded single photon source and the K delay lines can all be of the same length. The K delay lines can be configured to store the signal photons while the idler photons are being measured. The signal photons can then be routed into the first modular bundles via the switching module of the first modular bundle based on a corresponding idler photon being detected. The quantum memory can therefore serve to allow signal photons to be correctly routed into the first modular bundles based on their presence as determined by the presence of the idler photons. The quantum memory thus ensures only photons that were successfully generated are routed into the first modular bundle.

In another examples, the first output waveguide of each of the N heralded single photon modules outputs a first photon to the first set of one or more input waveguides of the switching module of the first modular bundle via a quantum memory. In these examples, the quantum memory, the quantum memory comprises N sets of input waveguides, each set of input waveguide configured to receive a photon from a set of output waveguide of one of the N heralded single photon modules; N sets of delay lines, each delay line configured to receive a photon from one of the input waveguides; K output waveguides, each output waveguide configured to receive a photon from one of the N sets of delay lines and output the photon to the first set of one or more input waveguides of the switching module of the first modular bundle, wherein K is a positive integer greater than or equal to 1; and a switching architecture configured to switch a photon received from any one of the delay lines to any one of the K output waveguides. The delay lines in the N sets of delay lines can each be associated with a heralded single photon source and the delay lines can all be of the same length. The delay lines can be configured to store the signal photons while the idler photons are being measured. The signal photons can then be routed into the first modular bundles via the switching module of the first modular bundle based on a corresponding idler photon being detected. The quantum memory can therefore serve to allow signal photons to be correctly routed into the first modular bundles based on their presence as determined by the presence of the idler photons. The quantum memory thus ensures only photons that were successfully generated are routed into the first modular bundle.

In some examples, modular optical quantum computer further comprises the photon detector apparatus, wherein the photon detector apparatus comprises: N first sets of one or more input waveguides, each of the N first sets of one or more input waveguides configured to receive one or more photons from a second set of one or more output waveguides of a heralded single photon module; M second sets of one or more input waveguides, each of the M second sets of one or more input waveguides configured to receive one or more photons from a first set of one or more output waveguides of a processor module of a modular bundle of the M modular bundles; L single photon detectors, wherein L is a positive integer greater than or equal to 1; and switching apparatus configured to route a photon from any of the N first sets of input waveguides and M second sets of one or more input waveguides to any of the L single photon detectors. Hence, the photon detector apparatus can receive idler photons from the single photon modules to determine the presence of photons and photons from the processor modules of each modular bundle and when photons are expected route them to a single photon detector. Hence, the photon detector apparatus is designed to function with the modular arrangement of the modular optical quantum computer.

In some examples, the modular optical quantum computer further comprises a cryogenic cooling unit, wherein the photon detector apparatus is positioned in the cryogenic cooling unit. Many forms of single photon detectors require cryogenic cooling, so this allows the use of standard photon detectors with the modular optical quantum computer. In addition, in many examples the other modules e.g. the modular bundles and the photon generation modules do not need cryogenic cooling and are not placed in the cryogenic cooling unit. The modular arrangement of the present invention allows only the photon detector apparatus to be positioned in the cryogenic cooling unit reducing challenges involved with cryogenic cooling by only cooling the necessary components.

In some examples, the modular optical quantum computer further comprises comprising control electronics, wherein the control electronics is configured to control switching and/or routing of photons in the modular optical quantum computer. The control electronics can be used to ensure correct timing and to route photons between modules and modular bundles.

In some examples, the M modular bundles, and wherein present, the photon generator, the quantum memory and the control electronics are at between 20°C to 50°C. This means these modules and modular bundles do not require cryogenic cooling so do not need to be placed in cryogenic cooling unit reducing the size and complexity of the cryogenic cooling unit required.

The preferred features may be combined as appropriate, as would be apparent to a skilled person and may be combined with any of the aspects of the invention.

### Brief Description of the Drawings

Embodiments of the invention will be described, by way of example, with reference to the following drawings, in which:
Figure 1 shows an example modular optical quantum computer containing M modular bundles;
Figure 2 shows an example modular optical quantum computer including the M modular bundle above, a photon source, a photon detector and a quantum memory; and
Figure 3 shows an example computing device that can be used to implement control electronics;
Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

This application relates to a modular optical quantum computer and in particular a modular photonic quantum computer. One proposed architecture for a quantum computer is a photonic quantum computer. In a photonic quantum computer individual photons are used as qubits (the quantum equivalent of bits) or qudits (a multi-dimensional generalization of the qubit). When the photons are used as a qubit then the two states of the qubit can be mapped into two states of the photon, for example photons can be used as qubits using polarization where horizontally polarization can be used to represent the state |0〉 and vertical polarization the state |1〉 or vice versa. In other examples, the qubits can be encoded in the path taken by the photons where a first path represents the state |0〉 and a second path the state |1〉. Other encodings of qubits into photons include time-bin encoding (where a single photon is guided through a Mach-Zehnder interferometer with differing path lengths, the shorter path corresponding to a computational |0> and the longer path to a computational |1> or vice versa) and frequency encoding (where the photon's energy represents its state). However, the skilled person would understand that any suitable encoding of qubits into photons can be used.

Photonic quantum computing has an advantage over other forms of quantum computing (such as using SQUIDs - superconducting quantum interference devices) that it is technically possible for the majority of the computation to be conducted at room temperature. However, in many currently proposed optical quantum computers, the final state of computation, the detection of the photons, is conducted using superconducting nanowire single photon detectors (SNSPDs) that require cryogenic cooling. As a result, many photonic quantum computers are positioned in cryogenic cooling systems despite their ability to operate at room temperature. This is both costly and impractical.

The present application relates to a modular photonic optical quantum computer wherein the modules are divided to enable the processing to be separate from the detection. This means the processing modules do not need to be placed in a cryogenic environment. In addition, making the photonic optical quantum computer modular enables easy maintenance, repair and scaling of the photonic optical quantum computer.

The present application in particular provides a specific modular arrangement of modular bundles for processing, wherein each modular bundle comprises a switching module, a graph state generation module and a processor module. The modular bundles form part of a photonic optical quantum computer along with photon sources, photon detectors and control electronics which are provided as separate modules from the modular bundles The modular bundle arrangement, wherein each modular bundle comprises a switching module, a graph state generation module and a processor module provides an effective trade-off between the challenges of facet losses which would come from having each component operate as a standalone chip and the challenges of complexity of fabrication and scaling which would come from having the optical photon quantum computer as a single module. Facet losses are one of the key bottlenecks in the creation of a photonic universal quantum computer. Facet losses occur because every time you couple light into/ out of a chip, there is some non-zero amount of optical loss at the chip edge ('facet') due to the transition. While this can be reduced in manufacture, to achieve close to zero facet loss would involve achieving perfect chip-to-fiber alignment, perfect optical mode overlap (the mode the light takes in the chip matching the mode it takes in the fiber), and identical refractive index, something difficult to achieve in practice. Another advantage of the modular arrangement in the present application is that the development of new techniques in both fabrication and in the fundamental understanding of quantum systems/algorithms for one aspect of the universal quantum computing may outpace the others asymmetrically. That is, if some new approach to quantum error correction is discovered, it can be inexpensively implemented by replacing only the processor module (where error correction takes place), rather than building a whole new monolithic system.

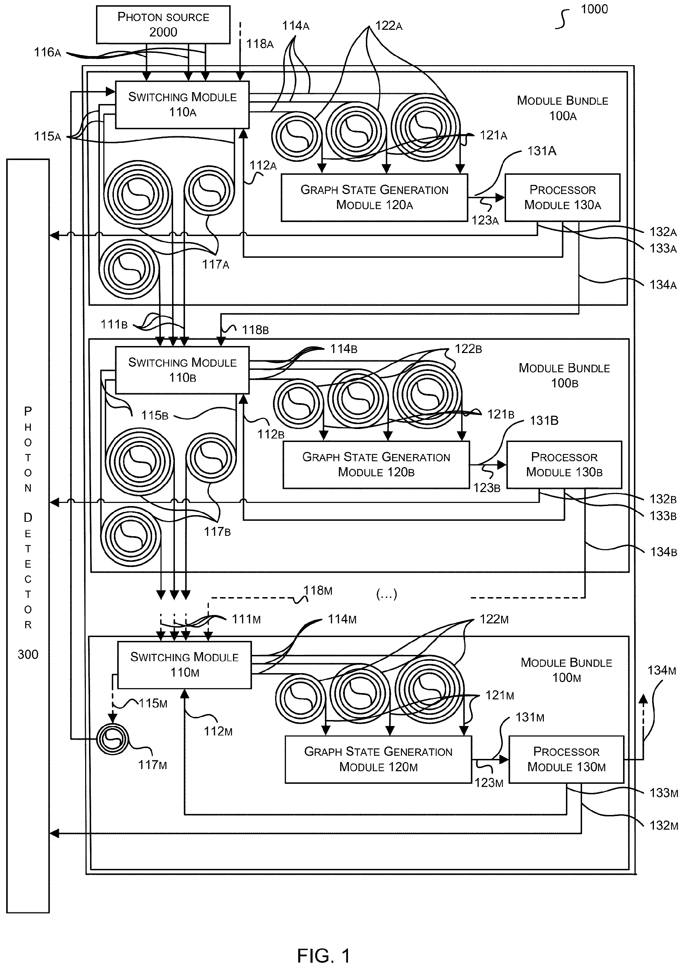

Figure 1 shows an example modular optical quantum computer 1000 in accordance with the present application. The modular optical quantum computer is formed from M modular bundles 100a-100m wherein M is a positive integer and is greater than or equal to one. Each modular bundle 100a-100m comprises a switching module 110a-110m, a graph state generation module 120a-120m and a processor module 130a-130m. In a broad overview, the switching module 110a-110m of each modular bundle 100a-100m can be used to route and synchronize incoming photons, wherein the incoming photons are received from a photon source 2000, a switching module 110a-110m of another modular bundle 100a-100m and/or the processor module 130a-130m of either the same modular bundle or another modular bundle 100a-100m. The switching module 110a-110m can be used to ensure a requisite number of photons arrive at the graph state generation module 120a-120m and hence the processor module 130a-130m synchronously and indistinguishably. The switching module 110a-110m of a specific modular bundle 100a-100m routes photons to either the graph state generation module 120a-120m of the same modular bundle 100a-100m or to a switching module 110a-110m of a different module bundle 100a-100m. The graph state generation module 120a-120m of each modular bundle 100a-100m receives photons from a switching module 110a-110m of the same modular bundle, generates graph states from the received photons and passes these graph states to the processor module 130a-130m of the same modular bundle 100a-100m. The processor module 130a-130m of each modular bundle 100a-100m receives the graph states generated by the graph state generation module 110a-110m of the same modular bundle and performs quantum operations on the received graph states. The processing of photons in the processor modules 130a-130m can also involve the implementation of any error correction protocols. This can be carried out via a series of fast switches and an algorithm for feeding forward selected photons or cluster states to reprocess at a future clock cycle depending on the error detected. In some examples, the error correcting code can comprise data qubits and syndrome qubits. However, in other examples a photon specific error correcting code with no clear distinction between the data qubits and the syndrome qubits can be used. The processor modules 130a-130m can output photons of the syndrome qubits or other qubits from the error correcting code to the photon detector 300 for measurement. The fast switches feed forward the data qubits to be reprocessed by first the graph-state generation module (where they are introduced to new photons from the subsequent clock cycle), then the processor module 130a-130m in a future clock cycle in a way that depends upon the detected error and the error correcting code. The skilled person would understand that the reprocessing depends on the error correcting code being used and any suitable error correction code can be used including photon specific error correcting codes. The processor module 130a-130m of each module bundle 100a-100m then outputs the processed photons. In some examples, the processor module 130a-130m can output the processed photons to either a photon detector 300 or the switching module 110a-110m of the same modular bundle 100a-100m. However, in other examples, the processor module 130a-130m can output the processed photons to a photon detector 300, the switching module 110a-110m of the same modular bundle 100a-100m or the switching module 110a-110m of another modular bundle 100a-100m. In either case, the photons processed by the processing module 130a-130m can either be measured by a photon detector 300 or placed back into the optical quantum computer 1000 for further computation.

As described above, each modular bundle 100a-100m has a switching module 110a-110m which enables photons to be routed from an initial photon source 2000 or around the photonic optical quantum computer. The switching module 110a-110m then outputs photons to a graph state generation module 120a-120m of the same modular bundle 100a-100m (but not the graph state generation module 120a-120m of a different modular bundle 100a-100m) and the graph state generation module 120a-120m exclusively outputs photons to a processor module 130a-130m of the same modular bundle. This enables the cluster state generation modules 120a-120m and the processor modules 130a-130m to be simplified since there is no need for these modules to consider the source of the input photons or introduce any routing or delays or consider synchronization. Instead, these modules can process the photons or graph states they receive at the time they are received with the switching modules 110a-110m taking care of routing and synchronization. In addition, having each modular bundle comprise a switching module 110a-110m, a graph state generation module 120a-120m and a processor module 130a-130m allows each modular bundle 100a-100m to be used for full processing and routing to other modular bundles 100a-100m while allowing the optical quantum computer to be expanded by easy addition of another modular bundle 100a-100m. In addition, this arrangement of modular bundles 100a-100m means if one modular bundle 100a-100m goes offline due to a fault, the routing from the switching modules 110a-110m can be adapted to allow the optical quantum computer 1000 to work while the modular bundle 100a-100m is offline.

As mentioned above, photons are routed between the modules in a modular bundle 100a-100m as well as between modular bundles 100a-100m themselves. The routing can be performed via waveguides which connect the modulars within and between the modular bundles 100a-100m.

Figure 1 is now discussed in more detail with information about the waveguides that connect the various modules and modular bundles 100a-100m. As mentioned above, the optical quantum computer comprises M modular bundles 100a-100m wherein M is an integer greater than 1. Each modular bundle 100a-100m comprises a switching module 110a-110m, a graph state generation module 120a-120m and a processor module 130a-130m. The modular bundles 100a-100m can also be referred to as groups of modules, collections of modules, modular groups or modular collections.

The switching module 110a-110m of a specific modular bundle 100a-100m comprises at least two sets of one or more input waveguides and at least two sets of one or more output waveguides and a switching architecture. The switching modules 110a-110m can also be known as routing modules or steering modules. The switching modules 110a-110m are used to switch or route photons between the various modular bundles 100a-100m and to control timing of photons arriving at the graph state generation modules 120a-120m. In some examples the switching architecture in a switching module 110a-110m can comprise actively controlled switches for routing photons received by the switching module 110a-110m. Such actively controlled switches can comprise, for example, thermal phase shifters, electro-optical phase shifters, piezoelectric phase shifters, quantum confined stark effect-driven phase shifters, and any other suitable interference or optical coupling-derived routing mechanism. In some examples, each switch may have a faster response time than 500 kHz and be coordinated by control electronics with latency <500 ns. This can provide useful switching with suitable response times given photon lifetime and the need to perform quantum operations. As discussed in more detail later, the actively controlled switches can be controlled by control electronics. As mentioned above, each switching module 110a-110m comprises at least two sets of one or more input waveguides referred to subsequently as a second and third set of one or more input waveguides but which could equally be called a first and second set of one or more input waveguides. A second set of the one or more input waveguides 111a-111m receives photons from a switching module 110a-110m of another of the modular bundles 100a-100m. A third set of the one or more input waveguides 112a-112m receives photons from the processor module 130a-130m of the same modular bundle 100a-100m as the switching module 110a-110m. As mentioned above, each switching module 110a-110m further comprises a first and second set of one or more output waveguides. The first set of one or more output waveguides 114a-114m are connected to a set of input waveguides for the graph state generation modules 120a-120m discussed below. As such, each waveguide of this first set of one or more output waveguides 114a-114m is configured to output a photon to a graph station generation module 120a-120m of the same modular bundle 100a-100m as the switching module 110a-110m. The second set of one or more output waveguides 115a-115m are connected to a second set of one or more input waveguides 111a-111m of another switching module 110a-110m. Thus, each waveguide of the second set of one or more output waveguides 115a-115m is configured to output a photon to a switching module 110a-110m of another modular bundle 100a-100m.

The second set of one or more output waveguides 115a-115m of one switching module 110a-110m being connected to the second set of one or more input waveguides 111a-111m of another switching module 110a-110m can comprise each the second set of one or more output waveguides 115a-115m being connected to a respective one of the second set of one or more input waveguides 111a-111m on a one-to-one basis. This connection can be via delay lines 117a-117m with each pair of waveguides within a single first set-second set connection having a delay line of a different length within the connection. This enables the switching modules 110a-110m to control the timing of the routing of the photons via selecting a first set-second set pair with an appropriate length of delay line to provide suitable timing for the routing.

In some examples, such as the example shown in Figure 1 the second set of output waveguides 115a-115m comprises a single set of output waveguides 115a-115m and the second set of one or more input waveguides 111a-111m comprises a single set of input waveguides 111a-111m. Thus, the switching module 110a-110m of each modular bundle 100a-100m only receives photons from the switching module 110a-110m of one other modular bundle 100a-100m and only sends photons to the switching module 110a-110m of one other module bundle 100a-100m. For example, as shown in Figure 1 the switching modules 110a-110m are connected in a chain-like fashion with a switching module 110a-110m of an ith modular bundle 100a-100m (where is from 1 to m) outputting photons via its second set of output waveguides 115a-115m to a second set of one or more input waveguides 111a-111m of a switching module 110a-110m of an i+1th modulo m modular bundle 100a-100m. This means the second set of output waveguides 115m of the switching module 110m of the mth modular bundle 100m output photons to the second set of one or more input waveguides 111a of the switching module 110a of the first modular bundle 100a. Having a single second set of output waveguides 115a-115m and a single first set of one or more input waveguides 111a-111m can simplify routing in the optical quantum computing enabling a more efficient design and less costly switching modules 110a-110m and corresponding control electronics.

In other examples (not shown) the second set of output waveguides 115a-115m comprises multiple subsets of second sets of output waveguides and the second set of one or more input waveguides 111a-111m comprise multiple subsets of second set of input waveguides 111a-111m. In these examples the switching module 110a-110m of one modular bundle 100a-100m can output photons to the switching module 110a-110m of several other modular bundles 100a-100m. In some instances, this can comprise the switching module 110a-110m of each modular bundle 100a-100m outputting photons to the switching module 110a-110m of every other modular bundle 100a-100m. In such instances, the second set of output waveguides 115a-115m of the switching module 110a-110m of each modular bundle 100a-100m comprises m-1 subsets with each subset of the second set of output waveguides 115a-115m outputting photons to switching modules 110a-110m of one of the other m-1 modular bundles 100a-100m. Likewise, the second set of one or more input waveguides 111a-111m comprises m-1 subsets with each subset receiving photons from a switching module 110a-110m of one of the other m-1 modular bundles 100a-100m. The waveguides in each subset of second sets of input waveguides 111a-110m can be connected to the waveguides in the corresponding subset of the second set of output waveguides 1115a-115m to facilitate such connections. In other instances, the switching module 110a-110m of each modular bundle 100a-100m is configured to output photons to the switching modules of w other modular bundles 100a-100m wherein w is an integer greater than 1 but less than m. Here, the second set of one or more input waveguides 111a-111m can comprise w subsets and the second set of output waveguides 115a-115m can comprise w subsets to facilitate such connections. Having the switching module 110a-110m of one modular bundle 100a-100m connect to the switching module 110a-110m of multiple other modular bundles100a-100m introduces redundancy which ensures if one modular bundle 100a-100m goes offline for any reason, the optical quantum computer can still be used by routing around the offline modular bundle 100a-100m. As above, the waveguides can be connected in a one-to-one pair like fashion as appropriate.

When subsets of input/output waveguides are used, delay lines can still be placed between each pair of waveguides in the subsets to enable the switching modules 110a-110m to control the timing of photons routing through the optical quantum computer 1000.

While the above has described how photons are routed through the optical quantum computer using the switching modules 110a-110m, the photons need to be input to the optical quantum computer in the first place. To this end, the switching modular 110a-110m of one or more of the modular bundles 100a-100m comprises a first set of one or more input waveguides 116a. This first set of one or more input waveguides receives photons from a photon generator or other photon source 2000 which may form part of the optical quantum computer or which may be provided offline and which are discussed in more detail later. In the example shown in Figure 1, only the switching module 111a of the first modular bundle 100a has a third set of one or more input waveguides 116a. However, in other examples, the switching module 110a-110m of every modular bundle 100a-100m can comprise a first set of one or more input waveguides 116a configured to receive photons from a photon source. In yet further examples, a switching module 110a-110m of a number of modular bundles 100a-100m greater than 1 but less than m can comprise first sets of one or more input waveguides 116a to receive photons from the photon source 2000.

Each modular bundle 100a-100m also comprises a graph state generation module 120a-120m. The graph state generation modules 120a-120m can also be known as cluster state generation modules. The graph state generation modules 120a-120m are configured to receive photons from a switching module 110a-110m of a same modular bundle 100a-100m as the graph state generation module 120a-120m and generate a graph or cluster state. In this context a graph or cluster state comprises a photonic graph state wherein photonic graph states are a species of entangled quantum state which can be depicted graphically upon which the vertices of the graph represent physical qubits (e.g. photons) and the edges of the graph represent entanglement. Photonic graphs states can be pictured as a n×n dimensional grid or a spider web, which can be actively built by introducing more photons and entangling them at the graph edges, or spent to learn about the system by detecting photons at the edge, removing them from the graph. Each entangled photon in the graph state contains some information about the whole system by proxy. The graph state can be generated by implementing or performing Bell-State measurements between pairs of photons which are to occupy edges of the graph state. Bell-State measurements may be used in measurement based quantum computing (MBQC) because Bell-State measurements can allow for continuous measurement and entanglement (addition & subtraction from the graph) and also enable teleporting of information between successive clock cycles in the photonic quantum computer, allowing for demanding computational tasks to be accomplished with fewer physical/logical qubits per clock cycle than what is "needed" to carry them out in the circuit model as the information is distributed in time rather than across multiple parallel channels simultaneously. In other examples, the graph state can be generated using controlled phase gates (CZ gates) between the pairs of photons which are to occupy edges of the graph stat which provides an alternative way to generate the same structure.

Each graph state generation module 120a-120m comprises a set of one or more input waveguides 121a-121m configured to receive photons from the first set of one or more output waveguides 114a-114m of a switching module 110a-110m of the same modular bundle 100a-100m. To this end, the first set of one or more output waveguides of a switching module 110a-110m of a respective bundle 100a-100m are connected to the set of one or more input waveguides 121a-121m of the graph state generation module 120a-120m of the respective modular bundle 100a-100m. In some examples, each waveguide of the first set of one or more output waveguides 114a-114m of the respective switching module 110a-110m is connected to a single waveguide of the one or more input waveguides 121a-121m of the respective graph state generation module 120a-120m in a one-to-one fashion. This connection can be via delay lines 122a-122m wherein a different length of delay line is used for each connection within a respective modular bundle 100a-100m. Switching each photon from the switching module 110a-110m into an appropriate delay line 122a-122m means the photons can be synchronous and indistinguishable at the graph state generation module 120a-120m and hence at the processor module 130a-130. In this regard, the switching module 110a-110m can use the selection of an appropriate delay line 122a-122m to ensure the photons are synchronized with a clock cycle of the optical quantum computer regardless of where the switching module 110a-11m receives the photon from. The control electronics can select the appropriate delay line 122a-122m via any suitable algorithm based on what was detected/lost at the previous clock cycle. This allows the switching module 110a-110m to control a timing of the photons arriving at the graph state generation module 120a-120m by selecting an appropriate waveguide from the first set of one or more output waveguides 114a-114m. This ensures that even if photons are being routed through the optical quantum computer 1000, photons arrive at the graph state generation module 120a-120m in a suitable just in time basis, synchronously and indistinguishably.

The photons received by the set of one or more input waveguides 121a-121m of the graph state generation module 120a-120m are processed by a graph state generator of the graph state generation module 120a-120m wherein the graph state generator is configured to generate graph states or cluster states as described above. Each graph state generation module 120a-120m further comprises an output waveguide 123a-123m configured to output the one or more graph states or cluster states generated by the graph state generator of the graph state generation module 120a-120m to a processor module 130a-130m of the same modular bundle 100a-100m as the graph state generator module 120a-120m containing the graph state generator. In some examples the output waveguide 123a-123m of the graph state generation module 130a-130m can comprise more than one waveguide. In this regard, the graph state module 120a-120m can output multiple independent photons which would enter the processor module 130a-130m simultaneously. This can be achieved using multiple output waveguides 123a-123m wherein each output waveguide 123a-123m transports a single photon. However, in examples, for example in systems of fewer than 10 qubits, there is no advanced switching/routing architecture to enable controlled routing/switching of graph states from the graph state generation module 120a-120m to the processor module 130a-130m. Instead, the controllable routing/switching is performed at the switching module 110a-110m. This simplifies the switching pathways of the optical quantum computer 1000 and the switching/routing within a single modular bundle 100a-100m.

Each modular bundle 100a-110m also comprises a processor module 130a-130m. The processor modules 130a-130m can also be known as qubit processor modules, or quantum processing device modules. The processor modules 130a-130m each comprise an input waveguide 131a-131m, a quantum optical processor and at least two output waveguides. In some examples, the processor modules 130a-130m can also each comprise switching circuitry or a switching architecture after the quantum optical processor.

The input waveguide 131a-131m of a processor module 130a-130m of a respective modular bundle 100a-100m is connected to the output waveguide 123a-123m of a graph state generation module 120a-120m of the respective modular bundle 100a-100m. Hence, the input waveguide 131a-131m of a respective processor module 130a-130m is configured to receive graph states output from the respective graph state generation modules 120a-120m. In the examples where the output waveguide 123a-123m of the graph state generation module 130a-130m is more than one waveguide, then the input waveguide 131a-131m of a respective processor module 130a-130m can also comprise more than one waveguide and the output and input waveguides can be connected on a one-to-one basis. The quantum optical processor of each processor module 130a-130m performs interference steps on the graph states received by that processor module 130a-130m to approximate gate operations and also implements any necessary error correction. The quantum optical processor can also be referred to as a processing device or a qubit processor. The processor modules 130a-130m can be configured to implement photonic-equivalent gate operations, error correction algorithms, and entanglement/interference operations which do not equate to an established gate. While the processor modules 130a-130m performs the interference and/or entangling operations as well as quantum error correction, as the optical quantum computer is being used for measurement based quantum computation, the quantum algorithm can be considered to be implemented through the measurements performed by photon detector 300.

After the graph states have been processed by the quantum optical processor of a respective processor module 130a-130m, the output once again comprises photons. As mentioned above, each processor module 130a-130m comprises at least two output waveguides. A first output waveguide 132a-132m outputs photons that have been processed by the quantum optical processor to a photon detector apparatus which will be described in more detail later. In some examples, the first output waveguide 132a-132m can comprise more than one waveguide or even a first set of one or more output waveguides. The second output waveguide 133a-133m outputs a photon to the switching module 110a-110m of the same modular bundle 100a-100m as the processor module 130a-130m. To this end, the second output waveguide 133a-133m of a respective processor module 130a-130m is connected to the third set of one or more input waveguides 112a-112m of the respective switching module 110a-110m. This enables photons to be reprocessed and routed back into the system. To facilitate the connection, in some examples the second output waveguide 133a-133m for a respective processor modular 130a-130m comprises a second set of one or more output waveguides and each waveguide in this set is connected to a corresponding waveguide from the third set of one or more input waveguides 112a-112m of a respective switching module 110a-110m on a one-to-one basis.

In some examples, the processor modules 130a-130m can comprise switching circuitry or a switching architecture. The switching circuitry or switching architecture can comprise any number of possible architectures for multiplexing and demultiplexing systems of large inputs and outputs including Benes switching structures, butterfly switching structures, and binary structures. The switching circuity here can facilitate a loop or feedforward so that photons can be teleported to adjacent time steps (clock cycles) and so that graph states can be propagated through the system. The switching circuit can comprise some selection of a basis that is orchestrated by the control electronics based on what errors are detected in the syndrome qubits, their correction algorithm(s), and what is being measured at each clock cycle (set by the larger computational algorithm). Here the selection of basis comprises e.g. a selection of the |0〉/|1〉 basis or the |+〉/|-〉 basis. For example, if the photons are encoded using polarization the |0〉/|1〉 basis can involve a basis based on horizontal and vertical polarization while the |+〉/|-〉 basis can involve a basis based on +/- 45° polarization. In another examples, the photons can be encoded using a time-bin encoding, where a photon is guided through a Mach-Zehnder interferometer with one path is longer than the other. The shorter path can correspond to a computational |0〉, and the longer path can correspond to a computational |1〉 or vice versa this defining the |0〉/|1〉 basis and the |+〉/|-〉 basis being based on a photon having non-zero probabilities of taking either path. Any other suitable basis or encoding can be used. Irrespective of the encoding, the switching circuitry or switching architecture is configured to select an appropriate output waveguide from the at least two output waveguides to output the photons after they have been processed by the quantum optical processor of the processor module 130a-130m.

The above-described use of modular bundles and connections via waveguides provides a convenient modular structure that enables a modular bundle 100a-100m to be easily replaced or repaired, often while keeping the rest of the optical quantum computer in service. In addition, modular bundles 100a-100m as described above simplify routing tasks and division of processing in the optical quantum computer while enabling relatively easy fabrication.

In some examples of the above, each modular bundle 100a-100m may be provided on a single chip. In other examples, each module may be provided on a single chip with the chips interconnected via waveguides. The materials or platforms used for the chips can comprise thin film lithium niobate (TFLN), barium titanate (BTO), indium phosphide, silicon nitride, silicon dioxide, aluminum nitride, silicon-on-insulator, or any suitable equivalent. Having each modular bundle 100a-100m on a single chip can reduce facet losses within a modular bundle. Having the modules on chips interconnected by waveguides provides improved flexibility in how modules are repaired and replaced.

As mentioned above, each processor module 130a-130m comprises at least two output waveguides. While in some examples the at least two output waveguides comprise just the output waveguides described above, in other examples each processor module 130a-130m is provided with further output waveguides in order to enable photons to be routed directly from the processor module 130a-130m of a first modular bundle 100a-100m to the switching module 110a-110m of another modular bundle 100a-100m. To this end, each processor module 130a-130m can comprise one or more further sets of output waveguides 134a-134m and each switching module 110a-110m can comprise one or more further sets of input waveguides 118a-118m. The one or more further sets of output waveguides 134a-134m of the processor module 130a-130m of each modular bundle 100a-100m are configured to output photons to a switching module 110a-110m of another modular bundle 100a-100m. Likewise, the one or more further sets of input waveguides 118a-118m of the switching module 110a-110m of each modular bundle 100a-100m are configured to receive photons from the processor module 130a-130m of another modular bundle. To this end, each set of the one or more further sets of input waveguides 118a-118m can be coupled to a respective set of the one or more further sets of output waveguides 134a-134m. In some examples, each waveguide from a set of input waveguides 118a-118m is coupled to a waveguide from a corresponding set of output waveguides 134a-134m on a one-to-one basis.

In some instances of the above example, the processor module 130a-130m of each modular bundle 100a-100m can be configured to output photons to the switching module 110a-110m of every other modular bundle 100a-100m. Correspondingly, in this instance, the switching module 110a-110m of each modular bundle 100a-100m can be configured to receive photons from the processor module 130a-130m of every other modular bundle 100a-100m. Hence, the one or more further sets of output waveguides 134a-134m of each processor module 130a-130m can comprise m-1 further sets of output waveguides 134a-134m. Likewise, the one or more further sets of input waveguides can comprise m-1 further sets of input waveguides 118a-118m. Each set of output waveguides 134a-134m can be connected to a corresponding set of input waveguides 118a-118m with the waveguides within an output set connected to the waveguides within a corresponding input set in a one-to-one fashion. This allows more flexible routing from the processor modules 130a-130m wherein the routing can be controlled by the switching circuitry or switching architecture in the processor modules 130a-130m.

In some examples there can be additional delay lines between the processor modules 130a-130m and the switching modules 110a-110m of the same or different modular bundles 100a-100m. However, as explained above the switching modules 110a-110m are responsible for the synchronization of photons and graph states so delay lines here are optional and if present can be a delay for example of an integer number of clock cycles for the optical quantum computer with the length of the delay lines set by the clock speed and the speed of light.

In other instances of the above example, the processor module 130a-130m of one modular bundle 100a-100m can be configured to output photons to the switching module 110a-110m of a subsequent modular bundle 100a-100m. In this example, the modular bundles 100a-100m can be considered to be numbered with a number i wherein i is an integer from 1 to M. The one or more further sets of output waveguides 134a-134m of each processor module 130a-130m comprises one set of further output waveguides 134a-134m wherein the output waveguides 134a-134m of the processor module 130a-130m of the ith modular bundle 100a-100m is configured to output photons to the switching module 110a-110m of the i+1th modulo M modular bundle 100a-100m. Similarly, the one or more further sets of input waveguides 118a-118m of the switching module 110a-110m of the i+1th modulo M modular bundle is configured to receive photons from the ith modular bundle 100a-100m. The further set of output waveguides 134a-134m of the ith modular bundle 100a-100m and the further set of input waveguides 118a-118m of the i+1th modulo M modular bundle 100a-100m can be connected with the waveguides being connected between the sets on a one-to-one basis. This provides a chain wherein the processor module 130a-130m of each modular bundle 100a-100m can output photons straight to a switching module 110a-110m of a next modular bundle 100a-100m.

In yet other instances of the above example, the processor module 130a-130m of one modular bundle 100a-100m can be configured to output photons to the switching module 110a-110m of x subsequent modular bundles 100a-100m wherein x is greater than 1 and less than M. Here there can be x further sets of output waveguides 134a-134m and x sets of input waveguides 118a-118m connected as discussed above to enable such output.

The skilled person would understand that the switching architecture at each switching module 110a-110m is configured to switch photons from any of the input waveguides to that switching module 110a-110m to any of the output waveguides of that switching module 110a-110m. Thus, where further sets of input waveguides 118a-118m are present, the switching architecture is configured to receive photons on these inputs and switch them to any of the output waveguides of the switching module 110a-110m. Likewise, where present, the switching circuitry or switching architecture of each processor module 130a-130m can be configured to route the photons from the processed graph state to any output waveguide of that processor module 130a-130m including, where present, the one or more further sets of output waveguide 134a-134m.

The above has described modular bundles 100a-100m that are used to form a modular optical quantum computer. The modular bundles 100a-100m described above are processing modules used to perform the processing and calculations of the optical quantum computer. Since the optical quantum computer is modular, such modular bundles 100a-100m could be used in a plug-n-play fashion wherein the modular bundles 100a-100m are connected to external photon sources and photon detectors. However, in other examples, the modular optical quantum computer further comprises photon sources and/or photon detectors.

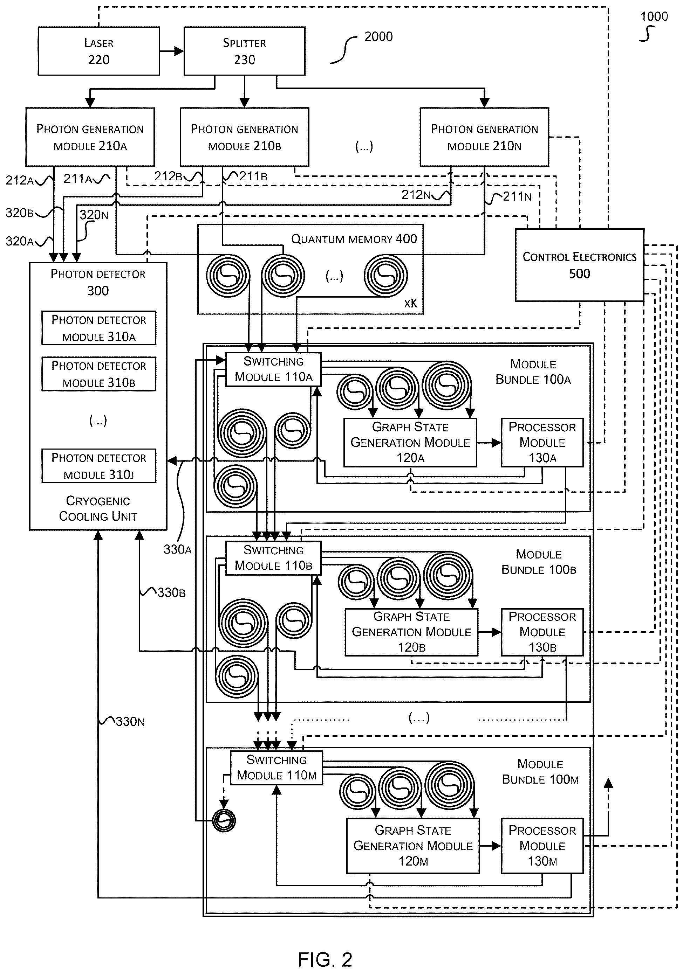

Figure 2 shows an optical quantum computer 1000 comprising M modular bundles 100a-100m as described above. In addition, Figure 2 shows details of the source of photons 2000 which itself forms part of the optical quantum computer 1000.

The source of photons 2000 shown in Figure 2 comprises N photon generation modules 210a-210n, one or more lasers 220 and one or more optical splitters 230. In some examples the one or more lasers 220 comprises a single laser. However, in other examples the one or more lasers 220 comprises more than one laser that are precisely synchronized. In some examples the pump pulse rate of the laser or lasers and hence the photon generation modules 210a-210n sets the maximum clock speed for the computer. While Figure 2 shows one laser and one optical splitter, the skilled person would understand that more lasers and corresponding optical splitters could be present. As shown in Figure 2, light from the laser 220 is received by the optical splitter 230 which then splits the light into N beams of light or independent optical channels. The optical splitter 230 can also be known as an optical divider and would be well known to the skilled person. Any suitable optical splitter 230 or optical divider can be used. Once the light from the laser has been split into N beams then each beam of light is sent to one of the N photon generation modules 210a-210n.

The photon generation modules 210a-210n can also be called photonic heralding modules or heralded single photon modules. Each photon generation module 210a-210n comprises at least one heralded single photon generator that is fed with beam of light from the optical splitter 230 either continuously or using a pulsed wave optical input in a fashion that is controlled based on a clock. The heralded single photon generator can comprise any known photon generator such as probabilistic generators such as integrated micro-ring resonators of any suitable geometry that can host spontaneous four wave mixing (SFWM). In other examples, the single photon generator may not be heralded and may instead be a deterministic generator. Any suitable deterministic photon generate can be used such as any suitable inserted material or structure which can facilitate cavity quantum electrodynamic (CQED) single photon generation (atoms, lattices vacancies, ions, quantum dots), systems which use a deterministic generation method followed by spectral multiplexing, or spontaneous parametric down conversion (SPDC) crystals. When heralded single photon generators are used, each heralded single photon generator is configured to generate a pair of single photons that comprise an entangled signal and idler photon. The signal photon and idler photon are at slightly different wavelengths, which make them separable and allows for pump light filtering. For SFWM on-chip, in some examples, the micro-ring resonators may be pumped at only 1-2% efficiency (e.g. they will generate single photons 1-2% of the time they are pumped) to avoid accidentally making more than a single pair of photons. Making more than a single pair of photons is an error which cannot be easily detected, and which can result in errors which operations and multiplexing. In contrast, an error of failure to generate a pair of photons can be detected so compensated for in operations and multiplexing. In other examples, more effective filtering or ring geometries may enable a higher pump efficiency to be used without generating in an undetectable manner more than a single pair of photons. Since single photon generation is often probabilistic, a heralded single photon generator will not generate a photon every clock cycle. In order to confirm a photon has been generated, the presence of the idler photon can be measured, if the idler photon is present, then it is known the signal photon is also present and the signal photon can be used as an input to the optical quantum computer 1000.

The source of photons 2000 further comprises a first set of one or more output waveguides 211a-211n and a second set of one or more output waveguides 212a-212n for each photon generation module 210a-210n. The first set of one or more output waveguides 211a-211n is configured to output the signal photons from the one or more heralded single photon generators respective photon generation module 210a-210n to one or more of the M modular bundles. As explained in more detail later, in some examples, the first set of one or more output waveguides 211a-211n outputs the photons to the one or more of the M modular bundles via a quantum memory 400. The second set of one or more output waveguides 212a-212n is configured to output idler photons from the respective photon generation module 211a-211n to the photon detector 300. The idler photons can then be detected at the photon detector 300 and, based on their source photon generation module 210a-210m and waveguide from the second set of one or more waveguides 212a-212m can be used to determine a corresponding waveguide of the first set of one or more output waveguides 211a-211n of the photon generation module 210a-210m that has a photon present.

In some examples, the first set of one or more output waveguides 211a-211n comprises M subsets of one or more output waveguides 211a-211n one for which modular bundle 100a-100m. In such examples, in some instances the first set of one or more output waveguides 211a-211n can output photons directly to the modular bundles 100a-100m by having the waveguides from each of the M subsets of one or more output waveguides 211a-211n couple to the waveguides from the first set of one or more input waveguides 116a-116m for a switching module 110a-110m of a corresponding modular bundle 100a-100m. However, in other examples, this coupling can be via quantum memory 400 as discussed below.

As mentioned above, each photon generation module 210a-210n comprises one or more heralded single photon generators. In some examples, up to one hundred to two hundred heralded single photon generators could be present at a photon generation module 210a-210n. In other words, the photon generation module 210a-210n can be considered to be a single chiplet, PIC, of the photon source 2000. In this context, up to one hundred to two hundred heralded single photon generators could be present on the single chip. Having multiple heralded single photon generators on a single chip results in a much denser unit for scaling the system, and alleviates the material loss of fabrication defects. When micro-rings or ring resonators are used as a single photon generator, then some number of rings will misbehave and be much less useful, packing many into each chip ensures the useful rings from a chip can be used and the results of the less useful ring discarded. Additionally, in many examples temperature control for a single chip can be done with a single control unit and the electronics hardware can also be minimized, as the number of required FPGAs (field programmable gate arrays) or ASICs (application specific integrated circuits) is reduced by only needing one control unit per chip. Thus, having multiple photon generators on a single chip can reduce the number of control units required.

The heralded single photon generators generate a pair of photons wherein the pair of photons comprises a signal photon and an idler photon. As explained in more detail below, the idler photon is directed to the photon detector 300 where a single photon detector is used to detect its presence. If the idler photon from a specific heralded single photon generator is present, then a signal photon from the heralded single photon generator is assumed to be present. Conversely, if an idler photon from the specific heralded single photon generator is not present then a signal photon is assumed to be not present. The potential signal photons are stored in a delay line while the idler photon is being measured. If the idler photon is present, a switching apparatus is used to route the signal photon to a switching module 110a-100m. If the control electronics and detectors are sufficiently fast e.g. control electronics with a latency less than 20ns and detectors with a detector efficiency greater than 90% and a recovery time of less than 20ns then the delay lines can be at the photon generation modules 210a-210n. However, in other examples a quantum memory 400 with passive delay lines would be used. The potential signal photons would be routed to a delay line corresponding to the specific heralded single photon generator within the quantum memory 400 and the potential idler photon to a single photon detector corresponding to the specific heralded single photon generator. Switching apparatus at the quantum memory 400 can then be used to route the signal photons in delay lines that correspond to a single photon detector that detected an idler photon (by virtue of their mutual connection to a heralded single photon source) to a switching module 110a-100m. In this regard, there may be a standard delay time for each photon before it is routed to allow for the photon detector to detect the idler photon and the control electronics to decide how to route the photon. The delay lines in the quantum memory 400 (which can also be referred to as a delay bank) are used to store the photons for this standard delay time. After the standard delay time a switching/multiplexing step occurs where the routing is implemented. To this end, in some examples, the heralded single photon generators feed a memory 400 or delay bank of delay lines all of the same length, which feeds at least switching module 110A, which feeds a module bundle-specific bank of delay lines 117A-117M of various lengths (all some integer number of clock-cycles long given the speed of light) so that successive photons can all be synchronized. The number of single photon generators is chosen such that there is a high probability of making enough signal photons at each clock cycle to successfully generate another layer to the graph state(s) in all the modular bundles 100a-100m, accounting for losses along the route.

As also shown in Figure 2, the optical quantum computer 1000 can also comprise a photon detector 300. The photon detector 300 comprises J photon detector modules 310a-310j wherein J is a positive integer greater than or equal to one. Each photon detector module 310a-310j comprises one or more single photon detectors. In some examples, each photon detector modular can comprise many thousand single photon detectors. The total number of single photon detectors can be given by L, wherein L is a positive integer greater than or equal to one and wherein the L single photon detectors are divided between the J photon detector modules 310a-310j.

The photon detector comprises N first sets of one or more input waveguides 320a-320n and M second sets of one or more inputs waveguides 330a-330m. Each set of the N first sets of one or more input waveguides 320a-320n are configured to receive photons from a corresponding one of the N photon generation modules 210a-210n, for example, by being connected to the second set of one or more output waveguides 212a-212n of the corresponding photon generation module 210a-210n. Each of the M second sets of one or more input waveguides 330a-330m are configured to receive photons from a processor module 130a-130m of a corresponding modular bundle 100a-100m, for example, by being connected to the first set of output waveguides 132a-132m of the processor module of the corresponding modular bundle 100a-100m. This enables the photon detector 300 to receive photons from the other modules of the optical quantum computer 1000 and act as an output of the optical quantum computer 1000.

The photon detector 300 also comprises switching apparatus (not shown) the switching apparatus is configured to route photons received on any of the N first sets of input waveguides and M second sets of input waveguides to any of the J photon detector modules 310a-310j and/or any of the L heralded single photon detectors. The photon detector 300 is used for both measuring the idler photon as part of a heralding process and for measuring photons output by the processor modules 130a-130m. For the heralding process there can be one single photon detector for each heralded single photon generator. In other words each heralded single photon generator can be connected in a 1 to 1 fashion with a single photon detector.

In some examples, the heralded single photon detectors can comprise SNSPDs (superconducting nanowire single photon detectors) or SPADs (single photon avalanche diodes) that need to operate at cryogenic temperatures. Thus, the photon detector 300 can be placed in a cryogenic cooling unit. In some examples, the cryogenic cooling unit can cool to a temperate of 4K in other examples, the cryogenic cooling unit can cool to a temperature of 223K (-50°C). This provides a suitable temperature for the functioning of the single photon detectors. For example, SNSPDs may operate between 1-4K and SPADs may be operated between 220-300K. In other examples, the heralded single photon detectors can comprise photomultiplier tubes (PMT), and color/vacancy centers in ultrapure materials (usually silicon or diamond) which may operate at close to room temperature. Other example single photon detectors that can be used comprise superconducting transition edge sensors (TES).

While the photon detector 300 can be placed in a cryogenic cooling unit, the other components/modules of the optical quantum computer may be able to operate at close to room temperate (e.g. between 20°C and 50°C). In some specific examples, the other components/modules of the optical quantum computer can be at 40°C as controlled by a Peltier unit. Hence, these modules may not require cooling. Thus, where present, the M modular bundles 100a-100m, the photon source 2000 and the quantum memory 400 can operate without cryogenic cooling at close to room temperature. Only having the photon detector 300 in the cryogenic cooling unit reduces the size of the cryogenic cooling unit required and thus increases feasibility of fabricating the modular optical quantum computer 1000. That said, in alternative examples one or more of these modules can be positioned in the cryogenic cooling unit for convenience.

As shown in Figure 2, the modular optical quantum computer 1000 can further comprise control electronics 500. The control electronics can be configured to control routing of the photons around the modular optical quantum computer 1000. To this end, the control electronics 500 can be configured to control the switching apparatus of the switching modules 110a-110m and where present, the switching apparatus in the processor modules 130a-130m, the photon detector 300. In addition, the control electronics can be configured to control the output of the quantum memory 400. In this regard the quantum memory can comprise a set of waveguides from the photon source 2000 wherein there is a waveguide for each heralded single photon generator that leads to a corresponding delay line. The delay lines in the quantum memory 400 can be passive delay lines with a length, for example, at least equivalent to one clock cycle. The signal photon from a heralded single photon generator is routed to the delay line and the idler photon detector 300 to a single photon detector at the photon detector 300. If the idler photon is detected by the single photon detector at the photon detector 300, then switching or routing apparatus at the memory 400 can be used to route the signal photon in a corresponding delay to a switching module 110a-110m, else the delay line is considered empty and the contents (or lack thereof) is discarded. In some examples, the control electronics 500 may comprise a single module but in other examples the control electronics 500 may comprise multiple modules. Some example implementations of control electronics 500 include:
- Field Controllable Gate Arrays (FPGA) - wherein each module of the optical quantum computer has its own local FPGA which communicate only with nearest neighbors. The use of FPGAs of this form work best for modular optical quantum computers with a small number of qubits e.g. fewer than 64 qubits.
- Application-Specific Integrated Circuits (ASIC) that are applied directly to the single photon generation modules and switching modules using flip-chip technology for faster control responses at a higher cost. Each ASIC could then communicate with only nearest neighbor modules of the same type (e.g. a type could be switching module or processor module) as well as a parent control system which directs signals between functionally distant modules in the optical quantum computer. In some examples the parent control system can be a single parent control system. In other examples, instead of a single parent control system there are a series of parallel parent control systems directing signals between functionally distant modules, such that the modules are bundled into neighborhoods of control.
- A combination of ASIC and FPGAs, wherein the ASICs are applied directly to the single photon generation modules and/or the switching modules, but where FPGA units are used for other modules such as the graph state generation modules. Both FPGA and ASIC units would then communicate with one or more parent control systems which would in turn communicate between all the relevant modules in the optical quantum computer. In some examples, a single parent control system could be used. In other examples, a series of networked parent control systems could be used rather than a single one. This would scale for implementation in larger quantum computers (higher qubit count) to keep from sacrificing too much response time (speed).
- A switching module, a photon detector module and a photon generation module could be networked by a single control system which allows for a faster multiplexing.
- Both FPGA controllers and ASIC systems can be implemented across the optical quantum computer architecture, parent control systems could be bundled such that FPGAs and ASICs are all bundled separately and therefore lines of communication are designed to run between the two controller types rather than being organized by module type.
- Each module can have some local control system (FPGA or ASIC) which communicates only with its own modular bundle-specific parent system, and where each modular bundle has its own parent control system. These parent systems would then be responsible for lines of communication between their children modules and the photon generation modules and photon detector modules. In this example, the photon generation modules and photon generation modules could each be networked in a number of different manners with their own parent control systems. This design approach is further iterated with variations that a skilled person could devise by the implementation of both FPGA and ASIC controllers in varied combination.

While the above provides some examples of control electronics, the skilled person would be aware of suitable control systems that can be used and any suitable system can be used.

While the control electronics above has been described as being used for routing, the skilled person would understand that the control electronics can also be used to control other aspects of the modular optical quantum computer. For example, the control electronics can be used to control temperature stability, drive voltages and/or the electric potential used to drive thermal or electrooptic modulators. The electric potential used to drive thermal or electrooptic modulators is set by the V_{π} of the modulator, which is usually < 15 V. So drive voltages rarely go above ±7.5 V for any single modulator.

The above has described a modular optical quantum computer 1000 wherein the processing is performed by modular bundles 100a-100m that can be added or replaced on an individual level and the modular bundles 100a-100m are configured to operate with a photon source 2000 and a photon detector 300. This arrangement of modules and modular bundles 100a-100m is advantageous as it reduces the number of facets required for fabrication while still providing a reasonable fine-grained level of control. Each module's function (photon generation, routing, switching, processing, etc.) can result in different requirements for an optimal platform for its performance (thicker waveguides, thinner waveguides, lithium niobate vs BTO vs silicon nitride, spot size convertors at the chip edge vs straight waveguides, smaller radius of curvature for delay lines and larger for chi 3 processes, etc.). Splitting each function of the computer up into pieces, their performance can be min/maxed by choosing the appropriate foundry/platform for each. Additionally, innovation in photonics design, foundry services, and materials science may advance more quickly for one foundry or platform than another, so a modular system allows for selective upgrades without having to refabricate a whole computer. In addition, photonics modules can be removed from the cryogenics and left to run at room temperature, saving on energy to run the computer and making it easier to control.

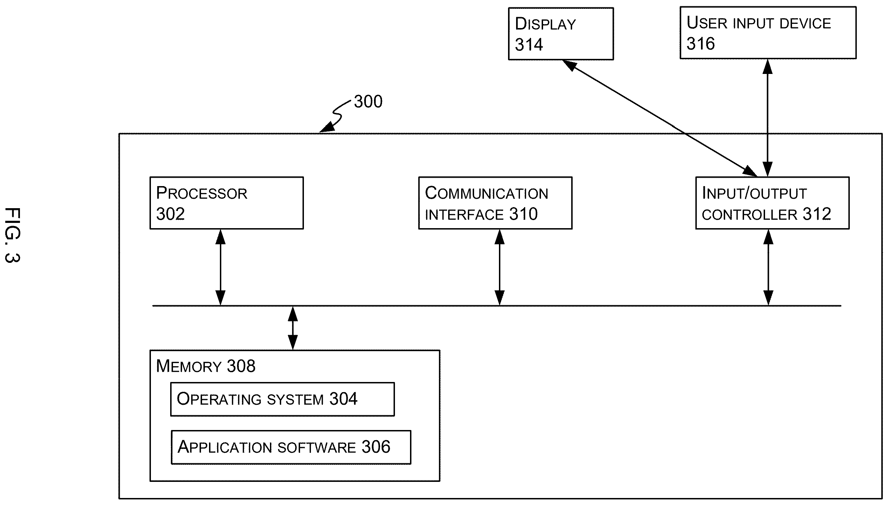

Figure 3 illustrates various components of an exemplary computing-based device 300 which may be implemented as any form of a computing and/or electronic device, and in which embodiments of the FPGA or ASIC may be implemented.

Computing-based device 300 comprises one or more processors 302 which may be microprocessors, controllers or any other suitable type of processors for processing computer executable instructions to control the operation of the device in order to implement the control electronics described above. In some examples, for example where a system on a chip architecture is used, the processors 302 may include one or more fixed function blocks (also referred to as accelerators) which implement a part of the methods performed by the control electronics in hardware (rather than software or firmware). Platform software comprising an operating system 304 or any other suitable platform software may be provided at the computing-based device to enable application software 306 to be executed on the device.

The computer executable instructions may be provided using any computer-readable media that is accessible by computing based device 300. Computer-readable media may include, for example, computer storage media such as memory 308 and communications media. Computer storage media, such as memory 308, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 308) is shown within the computing-based device 300 it will be appreciated that the storage may be distributed or located remotely and accessed via a network or other communication link (e.g. using communication interface 310).

The computing-based device 300 also comprises an input/output controller 312 arranged to output display information to a display device 314 which may be separate from or integral to the computing-based device 300. The display information may provide a graphical user interface. The input/output controller 312 is also arranged to receive and process input from one or more devices, such as a user input device 316 (e.g. a mouse or a keyboard). This user input may be used to input instructions to the control electronics. In an embodiment the display device 314 may also act as the user input device 316 if it is a touch sensitive display device. The input/output controller 312 may also output data to devices other than the display device, e.g. a locally connected printing device (not shown in Figure 3).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A modular optical quantum computer (1000), the modular optical quantum computer comprising:
M modular bundles (100a-100m), wherein M is greater than or equal to 1, and wherein each modular bundle of the M modular bundles comprises:
a respective switching module (110a-110m);
a respective graph state generation module (120a-120m); and
a respective processor module (130a-130m); wherein
the respective switching module comprises:
a first set (116a) of one or more input waveguides, each waveguide of the first set of one or more input waveguides configured to receive one or more photons from a photon generator (2000);
a second set (111a-111m) of one or more input waveguides, each waveguide of the second set of one or more input waveguides configured to receive one or more photons from a switching module of another of the M modular bundles;
a third set (112a-112m) of one or more input waveguides, each waveguide of the third set of one or more input waveguides configured to receive one or more photons from the respective processor module;
a first set (114a-114m) of one or more output waveguides, each waveguide of the first set of one or more output waveguides configured to output the received photon to the respective graph state generation module;
a second set (115a-115m) of one or more output waveguides, each waveguide of the second set of one or more output waveguides configured to output the received photon to a switching module of another of the M modular bundles; and
a switching architecture configured to switch one or more photons received on any of the first, second or third set of one or more input waveguides to any of the first or second set of one or more output waveguides;
the respective graph state generation module comprising:
a set (121a-121m) of one or more input waveguides, each waveguide of the set of one or more input waveguides configured to receive one or more photons from the first set of one or more output waveguides of the respective switching module;
a graph state generator configured to generate one or more graph states from the one or more photons received from the respective switching module; and
an output waveguide (123a-123m) configured to output the generated one or more graph states to the respective processor module;
the respective processor module comprising:
an input waveguide (131a-131m) configured to receive the one or more graph states from the output waveguide of the respective graph state generation module;
a quantum optical processor configured to process the photons of the graph state by performing quantum operations on the photons of the one or more graph states;
a first output waveguide (132a-132m) configured to output the processed photons of the graph state to a photon detector apparatus; and
a second set (133a-133m) of one or more output waveguides configured to output the processed photons of the graph state to the respective switching module.

2. The modular optical quantum computer of claim 1, wherein:
each respective processing module further comprises:
one or more further sets (134a-134m) of output waveguides, each waveguide of the one or more further sets of output waveguides configured to output the processed photons of the graph state to a switching module of another of the M modular bundles; and
each respective switching module further comprises:
one or more further sets (118a-118m) of input waveguides, each waveguide of the one or more further sets of input waveguides configured to receive photons from a processing module of another of the M modular bundles, and wherein:
the switching architecture of the respective switching module is configured to switch a photon received on any of the first, second, third, and one or more further sets of one or more input waveguides to any of the first or second sets of one or more output waveguides.

3. The modular optical quantum computer of claim 2, wherein:
the one or more further sets of one or more output waveguides of each processing module comprise M-1 further sets of one or more output waveguides and each of the M-1 further sets of one or more output waveguides is configured to output a photon to a switching module of a different one of the M modular bundles;
the one or more further sets of one or more input waveguides of each switching module comprise M-1 further sets of one or more input waveguides and each of the M-1 further sets of input waveguides is configured to receive a photon from a processing module of a different one of the M modular bundles; and
the switching architecture of each switching module is configured to switch a photon received on any of the first, second, third, and M-1 further sets of one or more input waveguides to any of the first or second sets of one or more output waveguides.

4. The modular optical quantum computer of claim 2, wherein:
the one or more further sets of one or more output waveguides of each processing module comprise one further set of one or more output waveguides, wherein the one further set of one or more output waveguides for the ith processing module, wherein i is an integer from 1 to M, is configured to output a photon to a switching module of the i+1th modulo M modular bundle;
the one or more further sets of one or more input waveguides of each switching module comprises one further set of one or more input waveguides, wherein the one further set of one or more input waveguides for the jth switching module, wherein j is from 1 to M, is configured to receive a photon from the processing module of the M-1th modulo M modular bundle; and
the switching architecture of each switching module is configured to switch a photon received on any of the first, second, third, and one further sets of one or more input waveguides to any of the first or second sets of one or more output waveguides.

5. The modular optical quantum computer of any previous claim, wherein each modular bundle of the M modular bundles further comprises:
a set of first one or more delay waveguides (122a-122m), wherein each first delay waveguide of the set of first one or more delay waveguides is positioned between a waveguide from the first set of one or more output waveguide of the switching module of the respective modular bundle and a waveguide from the set of one or more input waveguide of the graph state generation module of the respective modular bundle, and optionally, wherein each first delay waveguide of the set of first one or more delay waveguides for a respective modular bundle is a different length.

6. The modular optical quantum computer of any previous claim wherein:
the second set of one or more output waveguide of the switching module of the ith module bundle, wherein i is an integer from 1 to M, is configured to output a photon to the second set of one or more input waveguide of the switching module of the i+1th modulo M modular bundle.

7. The modular optical quantum computer of claim 6 further comprising:
M sets of second one or more delay waveguides (117a-117m), wherein each second delay waveguide of an ith set of second one or more delay waveguides, wherein i is between 1 and M, is positioned between a waveguide from the second set of one or more output waveguides of the switching module of the ith modular bundle and a waveguide from the second set of one or more input waveguides of the switching module of the i+1th modulo M modular bundle; and optionally, wherein each second delay waveguide of the ith set of second one or more delay waveguides is a different length.

8. The module optical quantum computer of any of claims 1 to 5, wherein:
the second set of one or more output waveguide of each switching module comprises M-1 subsets of one or more output waveguides, each subset of one or more output waveguides of the M-1 subsets of one or more output waveguides configured to output a photon to a switching module of a different another of the M modular bundles; and
the second set of one or more input waveguides of each switching module comprises M-1 subsets on one or more input waveguides, each subset of the M-1 subsets of one or more input waveguides configured to receive a photon from a switching module of a different another of the M modular bundles.

9. The modular optical quantum computer of claim 8 further comprising:
M sets of second one or more delay waveguides, each set of second one or more delay waveguides divided into M-1 subsets of second one or more delay waveguides; wherein
the second set of one or more input waveguides for each modular bundle are connected to the second set of one or more input waveguides of the other modular bundles via a second delay waveguide from the M sets of second one or more delay waveguides; and
optionally, wherein each second one or more delay waveguide in a subset of the M-1 subsets of M sets of second one or more delay waveguides is a different length.

10. The modular optical quantum computer of any previous claim further comprising a photon generator, wherein the photon generator comprises:
a laser (220);
an optical spitter (230) configured to split light received from the laser into N beams of light, wherein N is a positive integer greater than or equal to 1; and
N heralded single photon modules (210a-210n), wherein each of the N heralded single photon modules comprises:
one or more heralded single photon sources configured to receive one of the N beams of light from the optical splitter and to generate a pair of single photons;
a first set (211a-211n) of one or more output waveguides configured to output a first photon of the pair of single photons to the first set of one or more input waveguides of the switching module of M modular bundles; and
a second set (212a-212n) of one or more output waveguide configured to output a second photon of the pair of single photons to the single-photon detector apparatus.

11. The modular optical quantum computer of claim 10, wherein the first output waveguide of each of the N heralded single photon modules outputs a first photon to the first set of one or more input waveguides of the switching module of the first modular bundle via a quantum memory (400), and wherein the modular optical quantum computer further comprising:
the quantum memory, the quantum memory comprising:
K input waveguides, each input waveguide configured to receive a photon from an output waveguide of one of the N heralded single photon modules;
K delay lines, each delay line configured to receive a photon from one of the N input waveguides; and
K output waveguide, each output waveguide configured to receive a photon from one of the K delay lines and output the photon to the first set of one or more input waveguides of the switching module of the first modular bundle.

12. The modular optical quantum computer of claim 10, wherein the first output waveguide of each of the N heralded single photon modules outputs a first photon to the first set of one or more input waveguides of the switching module of the first modular bundle via a quantum memory, and wherein the modular optical quantum computer further comprising:
the quantum memory, the quantum memory comprising:
N sets of input waveguides, each set of input waveguide configured to receive a photon from a set of output waveguide of one of the N heralded single photon modules;
N sets of delay lines, each delay line configured to receive a photon from one of the input waveguides;
K output waveguides, each output waveguide configured to receive a photon from one of the N sets of delay lines and output the photon to the first set of one or more input waveguides of the switching module of the first modular bundle, wherein K is a positive integer greater than or equal to 1; and
a switching architecture configured to switch a photon received from any one of the delay lines to any one of the K output waveguides.

13. The modular optical quantum computer of any previous claim further comprising:
the photon detector apparatus, wherein the photon detector apparatus comprises:
N first sets (320a-320n) of one or more input waveguides, each of the N first sets of one or more input waveguides configured to receive one or more photons from a second set of one or more output waveguides of a heralded single photon module;
M second sets (330a-330m) of one or more input waveguides, each of the M second sets of one or more input waveguides configured to receive one or more photons from a first set of one or more output waveguides of a processor module of a modular bundle of the M modular bundles;
L single photon detectors, wherein L is a positive integer greater than or equal to 1; and
switching apparatus configured to route a photon from any of the N first sets of input waveguides and M second sets of one or more input waveguides to any of the L single photon detectors.

14. The modular optical quantum computer of claim 13, further comprising:
a cryogenic cooling unit, wherein the photon detector apparatus is positioned in the cryogenic cooling unit.

15. The modular optical quantum computer of any previous claim, wherein the M modular bundles, and wherein present, the photon generator, the quantum memory and the control electronics are at between 20°C to 50°C
